# EUROPEAN PATENT APPLICATION

(11) **EP 1 666 382 A1**
(43) Date of publication of application: **07.06.2006**
(21) Application number: 05780905.5
(22) Date of filing: 24.08.2005
(51) Int. Cl.: B65G 1/137, B65G 1/04

(54) **AUTOMATIC WAREHOUSE SYSTEM**

(30) Priority: 03.09.2004 JP 2004256954
(71) Applicant: MURATA KIKAI KABUSHIKI KAISHA, Kyoto 6018326 (JP)
(72) Inventor: ISHIDA, Masato, c/o MURATA SYSTEMS K.K., Minami-ku, Kyoto-shi, Kyoto 6018326 (JP); MURATA, Sampei, c/o MURATA KIKAI KABUSHIKI KAISHA, Inuyama-shi, Aichi 4848502 (JP)
(74) Representative: Liedl, Christine
(86) International application number: PCT/JP2005/015332
(87) International publication number: WO 2006/025235

(57) **Abstract**

ID readers 22 are provided on both left and right sides of a hoisting frame of a stacker crane in an automated warehouse for reading an ID tag 44 of a container 40. ID readers 24 are provided above the hoisting frame 24 for reading ID tags 48 of individual goods 46 on the container 40. When the container 40 is pulled onto the hoisting frame 8 by a slide fork 10, the ID tags 48 of the individual goods 46 are read. It is possible to read an ID of the container and IDs of the individual goods simply and reliably, and an inventory check or the like can be performed on the hoisting frame.

## Description

### Technical Field

The present invention relates to an automated warehouse system. In particular, present invention relates to an automated warehouse system in which an inventory check of articles (individual goods) in an automated warehouse can be performed easily.

### Background Art

Japanese Utility Model Laid-Open Publication No. 51-9482 discloses a technique in which a barcode is attached to a pallet, a barcode reader is provided at a hoisting frame of a stacker crane in an automated warehouse, and the barcode of the pallet is read while moving the hoisting frame along a rack. However, in the structure, inventory checks of individual articles cannot be performed.

In this specification, a container such as a pallet or a bucket may simply be referred to as the "container", and individual articles placed on the pallet or disposed in the bucket may be referred to as the "individual goods". Further, an ID written on an ID tag is readable. For example, the ID tag includes a barcode or an RFID tag. The RFID tag comprises an IC chip which makes it possible to read, and write the ID using electromagnetic waves, or optically in a non-contact manner. Electricity is supplied to the RFID tag by electromagnetic waves or the like from an ID reader. For example, the RFID tag has a label shape or a stick shape. Reading of the ID tag may simply be referred to as the reading of the ID.

### Summary of the Invention

A primary object of the present invention is to rapidly and reliably read an ID of a container and IDs of articles with simple structure.

Another object of the present invention is to read an ID of a container and IDs of individual goods using ID readers having a narrow reading range, and the number of the ID readers is reduced as much as possible.

Still another object of the present invention is to improve reliability in reading IDs of individual goods.

According to the present invention, an automated warehouse system is operated by moving a transfer apparatus along a rack in a warehouse such that a container is stored in, or retrieved from the rack. ID tags are attached to the container and individual articles in the container. The system comprises first reading means for reading an ID of the container without pulling the container out of the rack, and second reading means for reading IDs of the individual articles in the container by pulling the container out of the rack.

Preferably, the transfer apparatus is provided with the first reading means and the second reading means on a side facing the rack, and the articles in the container are scanned by the second reading means while pulling the container onto the transfer apparatus for reading the IDs of the individual articles in the container.

In particular, preferably, the automated warehouse system further comprises pulling control means for setting the speed of pulling the container at low speed at the time of reading the IDs of the individual articles in the container in comparison with the speed in the case where the IDs of the articles are not read.

Preferably, the transfer apparatus comprises a stacker crane including a truck movable in a movement direction in parallel with the rack, a mast provided at the truck, a hoisting frame vertically movable along the mast, and transfer means provided at the hoisting frame, and movable in the left-right direction perpendicular to the movement direction in the horizontal plane for transferring the container between the rack and the hoisting frame. The first reading means is provided at positions near the left and right ends of the hoisting frame on a side facing the rack for reading the ID of the container, and the second reading means is provided at upper positions near the left and right ends of the hoisting frame such that the container passes under the second reading means by the transfer means, and the articles in the container are scanned by the second reading means for reading the IDs of the individual articles in the container.

More preferably, racks are provided on the respective left and the right sides in the movement direction, the first reading means is provided on the respective left and right ends of the hoisting frame, and the second reading means is provided at upper positions near the left and right ends of the hoisting frame.

In particular, preferably, ID tags of the container are provided at both ends of the container in the left-right direction based on the state where the container is stocked in the rack.

Preferably, space for arranging at least two containers is provided in the hoisting frame, and the at least two containers can be transferred between the hoisting frame and the rack by the transfer means, and internal transfer means is provided in the hoisting frame for transferring the articles between the two containers while reading the IDs of the articles.

Further, an automated warehouse system is operated by moving a transfer apparatus along a rack in a warehouse such that a container is stored in, or retrieved from the rack, wherein ID tags are attached to the container and individual articles in the container. The system comprises first reading means for reading an ID of the container without moving into the rack, and second reading means for reading IDs of the individual articles in the container by moving into the rack.

### Advantages of the Invention

In the present invention, in the case where only an ID of a container needs to be read at the time of storing and retrieving goods in a warehouse, the ID can be read without pulling the container out of the rack. Therefore, it is possible to rapidly read the ID. Further, at the time of reading IDs of individual articles in the container, since the container is pulled out of the rack, it is possible to reliably read the IDs of the individual articles. At the time of pulling the container out of the rack, transfer means used for normal storage and retrieval and in the warehouse can be utilized. Therefore, without requiring any complicated mechanism additionally, it is possible to pull the container out of the rack.

The transfer apparatus is provided with the first reading means and the second reading means on a side facing the rack for reading the ID of the container. Thus, the ID of the container can be read reliably in a short distance. The IDs of the individual articles are read by scanning the IDs by the second reading means along the pulling direction of the container at the time of pulling the container onto the hoisting frame. Therefore, it is possible to read the IDs of the individual goods in a short distance reliably.

At the time of reading the IDs of the individual articles in the container, by setting the pulling speed of the articles is at a speed lower than the pulling speed in the case of normal storage and retrieval in the warehouse, even if the reading speed of the ID readers is low, it is possible to read the IDs reliably.

The stacker crane is provided with the first and second reading means. The first reading means may be provided at positions near the left and right ends of the hoisting frame on a side facing the rack to read the ID of the container, and the second reading means may be provided at upper positions near the left and right ends of the hoisting frame such that the container passes under the second reading means by the transfer means. In the structure, it is possible to read the ID of the container while the stacker crane is moving, and the hoisting frame is moving vertically. Further, it is possible to read the IDs of the individual articles in the container by moving the container using the transfer means to pass under the second reading means to scan the articles in the container.

Racks may be provided on the respective left and the right sides in the movement direction, the first reading means may be provided at the respective left and right ends of the hoisting frame, and second reading means may be provided at upper positions near the left and right ends of the hoisting frame. By providing the racks on both left and right sides in the movement direction of the stacker crane, it is possible to read the ID of the container and the IDs of the articles in each of the racks.

ID tags of the container may be provided at both ends of the container in the left-right direction based on the state where the container is stocked in the rack. In this case, regardless of whether the container is stocked in the rack on the left side or the rack on the right side, it is possible to read the ID of the container stocked in the rack.

In the case where space for arranging at least two containers is provided in the hoisting frame, the at least two containers can be transferred between the hoisting frame and the rack by the transfer means, and internal transfer means is provided in the hoisting frame for transferring the articles between the two containers while reading the IDs of the articles, it is possible to pack the articles by moving the articles between the containers while reading the IDs of the articles. Thus, the container packed with the articles for shipment can be prepared on the hoisting frame.

Further, according to another aspect of the present invention, in the case where only the ID of the container needs to be read at the time of storing and retrieving goods in a warehouse, the first reading means can read the ID without moving into the rack. Therefore, the ID can be read rapidly. Further, at the time of reading the IDs of the individual articles in the container, the second reading means moves into the rack, and reads the IDs of the articles in the container. Therefore, the IDs of the respective articles can be read reliably. The second reading means can be attached to transfer means used for normal storage and retrieval and in the warehouse. Therefore, the second reading means can move into the rack without requiring any complicated mechanism additionally. Preferably, the second reading means move into the rack at low speed in comparison with the case of the normal storage or retrieval in the warehouse. Further, at the time of moving the second means into the rack, or returning the second means after the entry into the rack, the articles in the container are scanned for reading the IDs of the individual articles in the container.

### Brief Description of the Drawings

FIG. 1 is a side view showing main components of an automated warehouse system according to an embodiment.
FIG. 2 is a plan view showing main components of the automated warehouse system according to the embodiment.
FIG. 3 is a plan view showing main components of a hoisting frame according to a modified embodiment.
FIG. 4 is a plan view showing main components of a hoisting frame according to a second modified embodiment.
FIG. 5 is a block diagram showing the overall structure of the automated warehouse system according to the embodiment.
FIG. 6 is a flow chart showing an inventory check algorithm in the automated warehouse system according to the embodiment.
FIG. 7 is a timing chart showing inventory check operation in the automated warehouse system according to the embodiment.
FIG. 8 is a side view showing main components of an automated warehouse system according to a second embodiment.

### Brief Description of the Symbols

| | | | | | | | |
|---|---|---|---|---|---|---|---|
| 2 | stacker crane | 4 | rack | 6 | mast | 8 | hoisting frame |
| 10 | slide fork | 12 | base unit | 14 | middle unit | | |
| 16 | top unit | 18 | chuck | 20 | gates | | |
| 22, 24 | ID readers | 25 | support | 26 | ID processing device | | |
| 28 | temporary memory | 30 | verificator | 32 | fork interface | | |

| | | | | | |
|---|---|---|---|---|---|
| 34 | communication device | 36 | pillar | 38 | support bar |
| 40 | container | 42 | flange | | |
| 44, 48 | ID tag | 46 | individual good | 50, 52 | communication area |
| 54 | transfer head | 56 | XY table 56 | 60, 62 | base communication device |
| 64 | storage station | 66 | retrieval station | | |
| 68 | storage conveyer | 70 | retrieval conveyer | 72 | transfer machine |
| 74 | ID reader | 80 | automated warehouse controller | | |
| 82 | communication terminal | | | | |
| 84 | monitor | 86 | keyboard | 88 | inventory file |
| 90 | CPU | 92 | memory | 94 | slide fork |
| 96 | middle unit | 98 | top unit | | |

### EMBODIMENTS

Hereinafter, embodiments in the most preferred form for carrying out the present invention will be described.

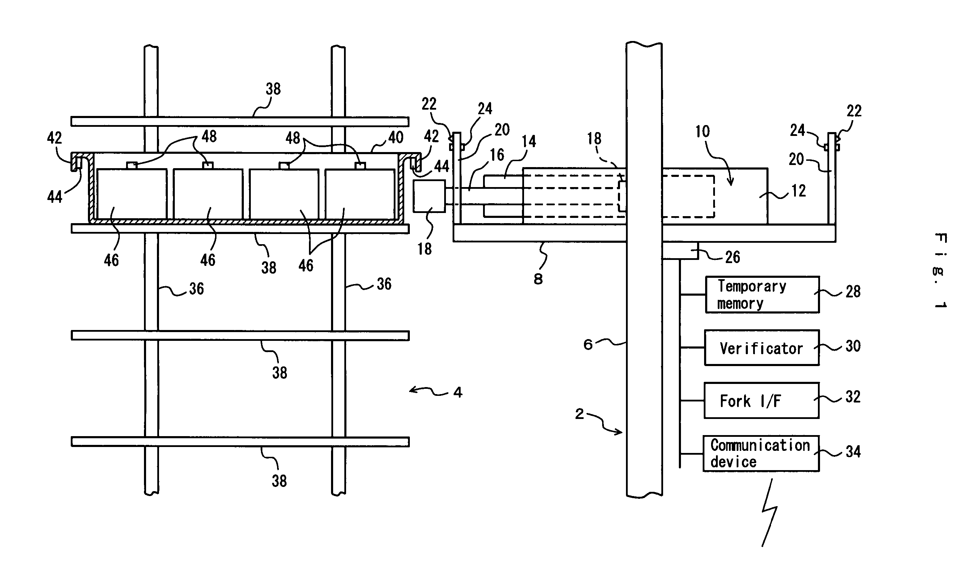

Embodiments and modified embodiments will be described with reference to FIGS. 1 to 8. In the embodiments and the modified embodiments, the same constituent elements are labeled with the same reference numeral. Unless specifically mentioned, description about the embodiments is directly applicable to the modified embodiments. In the drawings, a reference numeral 2 denotes a stacker crane, and a reference numeral 4 denotes a rack. As shown in FIG. 1, ID tags 44 are attached to a container 40 such as a bucket or a pallet, and ID tags 48 are attached to individual goods 46 in the container 40. ID readers 22, 24 are provided at a hoisting frame 8 of the stacker crane 2 for reading the ID tags 44 and the ID tags 48. A reference numeral 6 denotes a mast mounted on a truck provided at a lower position. The hoisting frame 8 moves vertically along the mast 6. Transfer means such as a slide fork 10 is provided on the hoisting frame 8. A reference numeral 12 denotes a base unit, a reference numeral 14 denotes a middle unit, and a reference numeral 16 denotes a top unit of the transfer means. At both (left and right) ends of the top unit 16, chucks 18 are provided for clamping the container 40 from the left side and the right side, and transferring the container 40. The type of the transfer means can be selected arbitrarily. Instead of the side clamp type transfer means as in the case of the present embodiment, scoop type transfer means may be used. Reference numerals 20 denote gates provided on the hoisting frame 8 for mounting the ID readers 22, 24.

Data of the ID tag 44 of the container includes a container number, records of operations such as storage operation, retrieval operation, and inventory check operation, and the current rack address (storage position). Data of the ID tag 48 of the individual good 46 includes an ID of the individual good 46, an article name, the number of articles, reference dates such as the date of storage and the date of manufacture, and remark data. The remark data represents special instructions such as "reserved for retrieval", or "allocated for special purpose". Further, in the case of a parts warehouse or the like, and individual goods are retrieved, and stored for retrieval of parts, the remark data may include data of the date and the time of the previous storage operation or retrieval operation. The individual good 46 is not limited to a single article. For example, the individual good 46 may be a cardboard. The ID tag may be a barcode label. It is preferable that the ID tag is an RFID tag. Further, it is preferable that the ID tag is readable/writable.

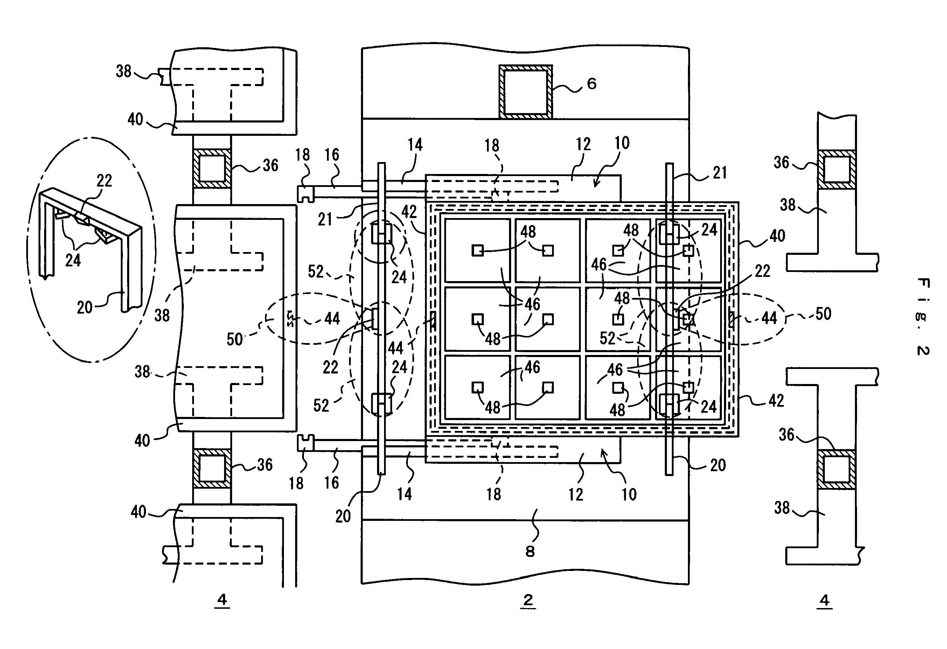

In the case where a pair of racks 4, 4 are provided on the left and right sides in the movement direction of the stacker crane 2, the ID readers 22, 24 are provided on the left and right sides of the hoisting frame 8. The ID reader 22 can read/write the ID of the ID tag 44 provided inside a flange 42 of the container 40. In the case where the rack 4 is provided only on one of the left and right sides in the movement direction of the stacker crane 2, the ID readers 22, 24 should be provided on the side where the rack 4 is present. For example, a pair of gates 20 are provided on the front and back sides of the hoisting frame 8. As shown in FIG. 2, for example, one ID reader 22 is provided on the left side of the hoisting frame 8, and one ID reader 22 is provided on the right side of the hoisting frame 8. For example, a pair of ID readers 24 are provided on the left side of the hoisting frame 8, and a pair of ID readers 24 are provided on the right side of the hoisting frame 8. Attachment of the ID readers 24 to the gate 20 is shown on the left side in FIG. 2. Each of the ID readers 24 has a surface on which an antenna for communicating with the ID tag 48, and the surface is inclined from the horizontal plane such that the communication areas 52, 52 of the pair of ID readers 24, 24 on the front and back sides are overlapped with each other. Thus, it is possible to read/write the data of the ID tags 48 arranged over the entire width in the container 40.

The data which is read, or written by the ID readers 22, 24 may be processed on the truck of the stacker crane 2, or may be processed on the ground. However, in the embodiment, in order to prevent the delay of the inventory check due to the communication time, an ID processing device 26 is provided on the hoisting frame 8 to process the data from the ID readers 22, 24. A reference numeral 28 denotes a temporary memory for temporarily storing data read by the ID readers 22, 24, and temporarily storing inventory data received from the ground side for the corresponding container 40. A verificator 30 verifies the data read by the ID readers 22, 24 with the inventory data received from the ground side. At a transfer interface (fork interface) 32, when the ID tags 48 of the individual goods 46 in the container 40 are read/written, the pulling speed is reduced to about 1/2 of the normal speed at the time of storage/retrieval operation with the slide fork 10, so that the ID tags 48 can be read/written reliably. A communication device 34 handles communication, e.g., between the ID processing device 26 and the truck. The pulling speed may be determined based on the specification of ID tag or the processing speed of the processing device for the read/written data.

Reference numerals 36 denote pillars of the rack 4, and reference numerals 38 denote support bars. The container 40 is supported above the support bars 38. For example, the ID tag 44 is attached to the inside of the flange 42 of the container 40. The ID tags 48 are attached on the respective individual goods 46. For example, the antenna surfaces of the pair of ID readers 22 provided on the left and right sides of the hoisting frame 8 are inclined obliquely downwardly. While protecting the ID tags 44 by the flanges 42, the ID tags 44 are read/written by the ID readers 22 in a short distance. In the embodiment, since the ID tags 48 are attached on the individual goods 46, the ID readers 24 are provided at upper positions of the hoisting frame 8. Alternatively, in the case where the ID tags 48 are attached on the bottom surfaces of the individual goods 46, a plurality of ID readers 24 may be attached to the hoisting frame 8 such that the container 40 passes above the positions of the ID readers 24 for reading/writing data of the ID tags 48.

As shown in FIG. 2, the ID reader 22 reads the ID at a position facing the ID tag 44 of the container 40. Even if the communication area 50 is narrow, it is possible to read/write the ID tag 44. The communication areas 52, 52 of the ID readers 24, 24 on the front and back sides are overlapped with each other at the center in the width direction of the container 40, and it is possible to scan all of the ID tags 48 on the container 40. If a gap is formed between the communication areas 52, 52 at the center in the width direction of the container 40, it may not be possible to read the ID tags positioned at the center in the width direction of the container 40. As shown in FIG. 2, a pair of ID readers 24 are provided on the right side of the hoisting frame 8, and a pair of ID readers 24 are provided on the left side of the hoisting frame 8. In the arrangement, regardless of whether the container is pulled from the left side or pulled from the right side, it is possible to read/write the ID tags 48.

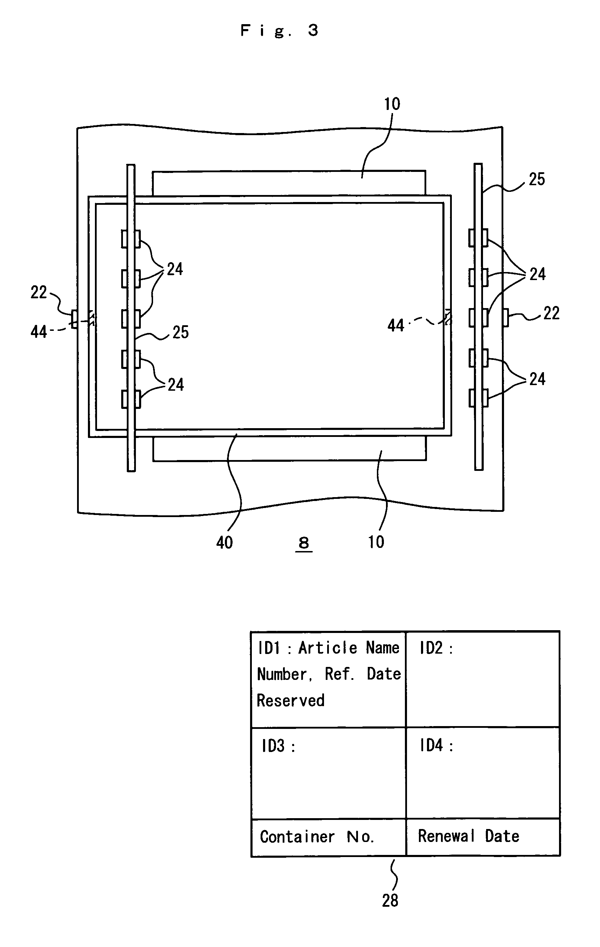

FIG. 3 shows a modified arrangement of the ID readers 24. For example, at least three ID readers 24 are provided on the left side, and at least three ID readers 24 are provided on the right side above the hoisting frame 8 along a support 25, and positions of the respective ID tags are determined. In the arrangement, it is possible to determine the positions of the ID tags in the container 40. As shown on the lower side in FIG. 3, it is possible to write the position of the individual goods in the container 40 and the content of the ID in the temporary memory 28. In the case of FIG. 3, the antenna surfaces of a plurality of ID readers 24 may be slightly inclined inwardly such that the communication areas are overlapped with each other. Alternatively, the antennal surfaces of the ID readers 24 may be oriented horizontally such that the communication areas are partially overlapped with each other.

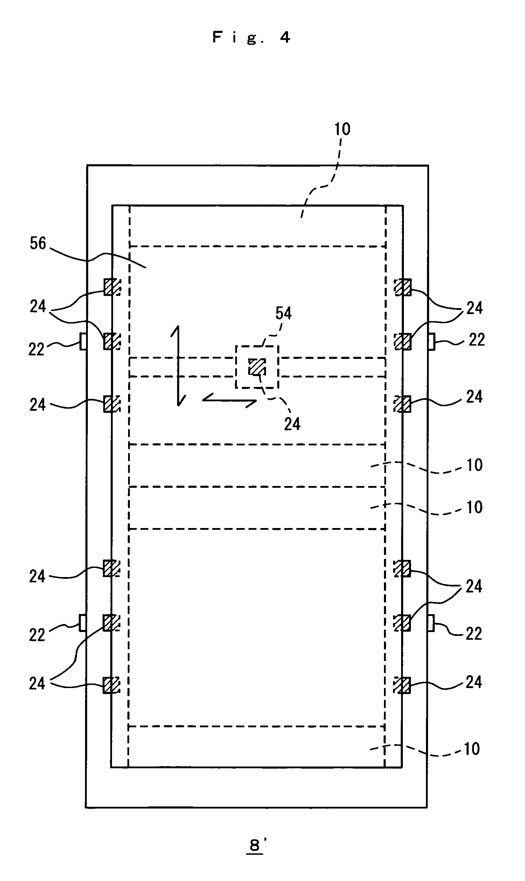

FIG. 4 shows a hoisting frame 8' in which further modification is made to the modified embodiment in FIG. 3. Two containers can be pulled onto the hoisting frame 8' at the same time. Using an XY table 56 to move a transfer head 54 between the two containers, it is possible to transfer the individual goods from one container to the other container. For example, the ID readers 24 are provided on both left and right sides of the XY table 56, and the IDs of the individual goods are read/written when the containers are pulled onto the hoisting frame 8' or when the containers on the hoisting frame 8' are transferred to a rack, a station or the like. For example, the transfer head 54 sucks the upper surface of the individual good, or clamps the side surfaces of the individual good, and then, moves in an XY direction along the bottom surface of the XY table 56 for transferring the individual good. Preferably, the ID reader 24 is also provided at the transfer head 54 for reading the ID tag of the individual good.

In this manner, it is possible to perform the inventory check on the hoisting frame 8' by reading the IDs of the individual goods. Further, in the case where one of the containers is used as the container for shipment, it is possible to transfer the required individual goods between the containers based on the IDs read by the ID readers 24. By moving the stacker crane in the automated warehouse, it is possible to pack the individual goods needed for shipment in one of the containers. If it is not sufficient to identify the positions of the individual goods only by reading by the ID readers 24, a camera or the like should be provided additionally. Further, by utilizing the intensity or orientation of the receiving wave from the ID tags, it is possible to estimate the positions of the individual goods more correctly.

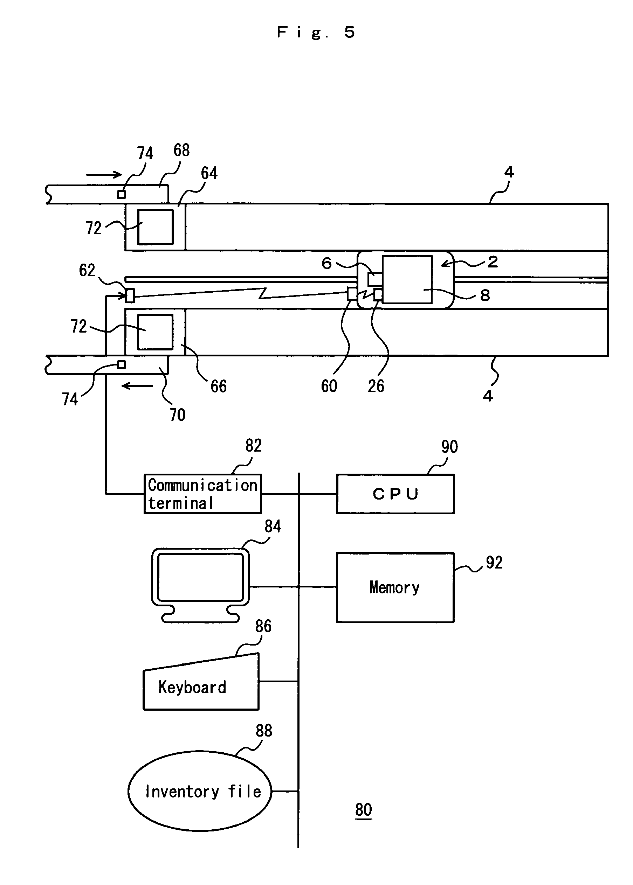

FIG. 5 shows the overall structure of the automated warehouse system according to the embodiment. For example, the racks 4, 4 are provided on both left and right sides along the moving path the stacker crane 2. The ID processing device 26 at the hoisting frame 8 communicates with a communication device 60 provided on the truck of the stacker crane 2, and the communication deice 60 communicates with a base communication device 62 on the ground side, e.g., by optical communication. A reference numeral 64 denotes a storage station, and a reference numeral 66 denotes a retrieval station. A single station may be used for both of storage and retrieval. A reference numeral 68 denotes a storage conveyer, and a reference numeral 70 denotes a retrieval conveyer. For example, transfer machines 72 are provided in the respective stations 64, 66 so that articles can be transferred between the containers and the conveyers 68, 70 in the units of individual goods. Further, the ID reader 74 is provided at each of the storage conveyer 68, the retrieval conveyer 70 and/or the transfer machines 72 for reading the articles which are stored in, and retrieved from the warehouse.

A communication terminal 82 is provided on an automated warehouse controller 80 on the ground side, and the communication terminal 82 is connected to the communication device 62. A reference numeral 84 denotes a monitor, a reference numeral 86 denotes a keyboard, and a reference numeral 88 denotes an inventory file. A reference numeral 90 denotes a CPU, and a reference numeral 92 denotes a memory. In the automated warehouse system in FIG. 5, without substantially requiring manual operation, picking of the articles can be performed. Further, the articles for storage, the article for retrieval, and the articles in stock are managed using the IDs in the units of individual goods. Further, it is possible to read the IDs of the articles stocked in the rack 4 above the hoisting frame 8. Thus, the inventory file 88 can be arranged in the units of individual goods instead of the units of container or rack address.

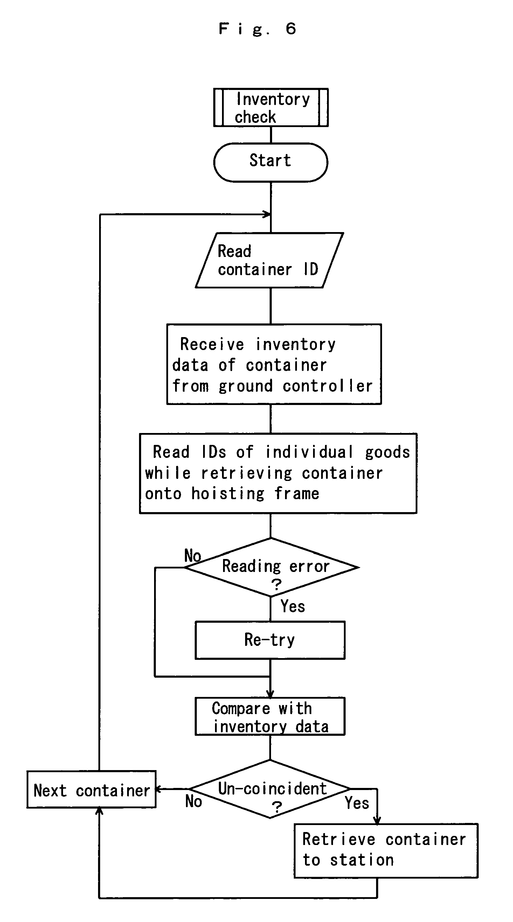

FIG. 6 shows an algorithm of inventory check operation according to the embodiment. By moving the stacker crane, and vertically moving the hoisting frame, the hoisting frame is stopped at a position in front of the container, i.e., at a stop position for storing, and retrieving the container. Then, an ID of the container is read. At the time of performing an inventory check, after reading the ID of the container, a request for sending the inventory data of the container corresponding to the read ID is sent to the ground controller. Then, the container is pulled, and transferred onto the hoisting frame. When the individual goods pass under the ID readers, the IDs of the individual goods are read. If an error occurs in reading any of the IDs, the slide fork is moved back and forth for trying to read the ID again. When reading of the IDs of the articles in the container and reception of the inventory data from the ground side are finished, the inventory data is compared with the ID data. If no error is found, the container is returned to the original position, and an inventory check for the next container is performed. If an error is found, for example, the container is retrieved to the retrieval station, and then, the container is manually inspected. In order to prevent interruption of the inventory check operation in the middle, the container having the error may be returned directly to the rack, and retrieved to the retrieval station after the inventory check operation.

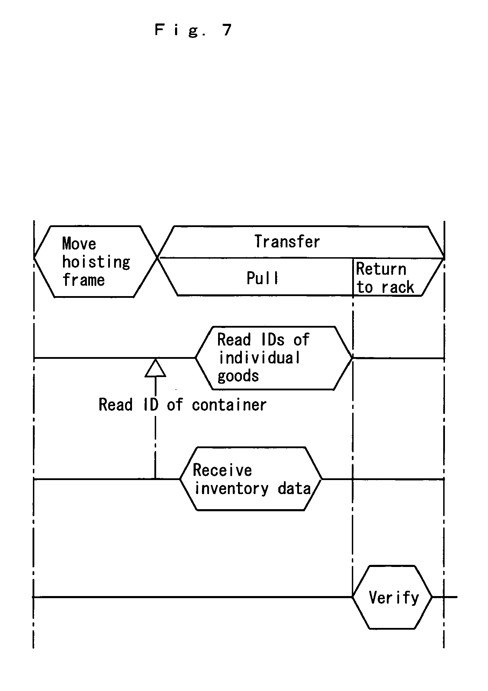

FIG. 7 illustrates a timing chart at the time of inventory check operation. By moving the stacker crane, and vertically moving the hoisting frame, the hoisting frame is moved to the desired position. When the ID reader for reading the ID of the container comes to a position in front of the container, the ID reader reads the ID of the container. Then, a request for sending the inventory data is sent to the ground side, and the inventory data is received. During the process, the container is pulled onto the hoisting frame. The container is pulled at low speed, e.g., about 1/2 of the speed of returning the container to the rack so that the IDs of the individual goods can be read easily. Reading of the IDs and reception of the inventory data are performed in parallel. For example, when verification is finished, and it is found that there is no error, the container is returned to the rack. In the case where the probability of finding the error is low, operation of returning the container to the rack and verification are carried out in parallel.

Verification of the inventory data may not be carried out on the hoisting frame, and may be carried out on the ground side. However, in this case, the cycle of the inventory check becomes long for the time required for transmission of the inventory data. Further, reading of the IDs of the individual goods may be carried out at the time of the inventory check. It is not necessary to read the IDs of the individual goods each time a container is stored or retrieved. In the embodiment, the inventory check has been described in connection with an example in which the inventory data and the articles in stock are compared with each other for verifying the inventory data. However, even if the inventory data is lost for some reasons, the inventory data can be reproduced by the similar process.

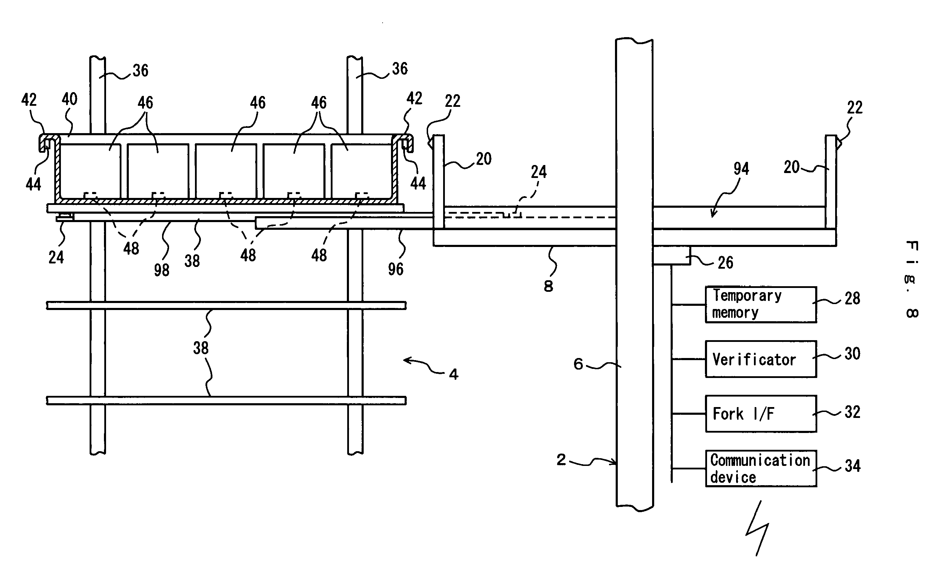

FIG. 8 shows an embodiment in which ID the readers 24 are provided at opposite ends of a top unit 98 of a slide fork 94 used for transferring the container 40. In FIG. 8, a reference numeral 96 denotes a middle unit. The ID readers 24 are attached to the opposite ends of the top unit 98. The top surfaces of the ID readers 24 are lower than the top surface of the top unit 98. Therefore, the ID readers 24 are not rubbed against the bottom surface of the container 40. In the embodiment, the top unit 98 is moved into the rack 4 to read the ID tags 48 of the individual goods 46. The embodiment is same as the embodiments in FIG. 1 to 7 in the other respects. For example, the ID readers 22 are fixedly attached to the gates 20 on the left and right sides of the hoisting frame 8, and the ID readers 22 are oriented obliquely downwardly to read the ID tag 44 of the container 40. The description about the embodiments and the modified embodiments of FIGS. 1 to 7 are applicable to the embodiment of FIG. 8 except that the ID readers 24 are provided at the top unit 98 instead of the gates 20.

## Claims

1. An automated warehouse system operated by moving a transfer apparatus along a rack in a warehouse such that a container is stored in, or retrieved from the rack, wherein
ID tags are attached to the container and individual articles in the container, and the system comprises: first reading means for reading an ID of the container without pulling the container out of the rack; and second reading means for reading IDs of the individual articles in the container by pulling the container out of the rack.

2. The automated warehouse system of claim 1, wherein the transfer apparatus is provided with the first reading means and the second reading means on a side facing the rack, and the articles in the container are scanned by the second reading means while pulling the container out of the rack onto the transfer apparatus for reading the IDs of the individual articles in the container.

3. The automated warehouse system of claim 2, further comprising pulling control means for setting a speed of pulling the container at low speed at the time of reading the IDs of the individual articles in the container in comparison with a speed in the case where the IDs of the articles are not read.

4. The automated warehouse system of claim 1, wherein the transfer apparatus comprises a stacker crane including: a truck movable in a movement direction in parallel with the rack; a mast provided at the truck; a hoisting frame vertically movable along the mast; and transfer means provided at the hoisting frame and movable in the left-right direction perpendicular to the movement direction in the horizontal plane for transferring the container between the rack and the hoisting frame,
the first reading means is provided in at least one of positions near the left and right ends of the hoisting frame on a side facing the rack for reading the ID of the container, and
the second reading means is provided in at least one of upper positions near the left and right ends of the hoisting frame such that the container passes under the second reading means by the transfer means, and the articles in the container are scanned by the second reading means for reading the IDs of the individual articles in the container.

5. The automated warehouse system of claim 4, wherein
the rack is provided on at least one of respective left and right sides in the movement direction,
the first reading means is provided on at least one of respective left and right ends of the hoisting frame, and
the second reading means is provided in at least one of upper positions near the respective left and right ends of the hoisting frame.

6. The automated warehouse system of claim 5, wherein the ID tags of the container are provided at both ends of the container in the left-right direction based on the state where the container is stocked in the rack.

7. The automated warehouse system of claim 4, wherein space for arranging at least two of the containers is provided in the hoisting frame, and the at least two containers can be transferred between the hoisting frame and the rack by the transfer means, and internal transfer means is provided in the hoisting frame for transferring the articles between the at least two containers while reading the IDs of the articles.

8. An automated warehouse system operated by moving a transfer apparatus along a rack in a warehouse such that a container is stored in, or retrieved from the rack, wherein
ID tags are attached to the container and individual articles in the container, and the system comprises: first reading means for reading an ID of the container without moving into the rack; and second reading means for reading IDs of the individual articles in the container by moving into the rack.

## Amended claims

### Amended claims under Art. 19.1 PCT

**1.** (Amended) An automated warehouse system operated by moving a transfer apparatus along a rack in a warehouse such that a container is stored in, or retrieved from the rack, wherein
ID tags are attached to the container and individual articles in the container,
first reading means is provided in the transfer apparatus on a side facing the rack for reading an ID of the container without pulling the container out of the rack, and
second reading means is provided in the transfer apparatus on a side facing the rack, and the articles in the container are scanned by the second reading means while pulling the container out of the rack onto the transfer apparatus for reading the IDs of the individual articles in the container.

**2.** (Amended) The automated warehouse system of claim 1, further comprising pulling control means for setting a speed of pulling the container at low speed at the time of reading the IDs of the individual articles in the container in comparison with a speed in the case where the IDs of the articles are not read.

**3.** (Amended) The automated warehouse system of claim 1, wherein the transfer apparatus comprises a stacker crane including: a truck movable in a movement direction in parallel with the rack; a mast provided at the truck; a hoisting frame vertically movable along the mast; and transfer means provided at the hoisting frame and movable in the left-right direction perpendicular to the movement direction in the horizontal plane for transferring the container between the rack and the hoisting frame,
the first reading means is provided in at least one of positions near the left and right ends of the hoisting frame on a side facing the rack for reading the ID of the container, and
the second reading means is provided in at least one of upper positions near the left and right ends of the hoisting frame such that the container passes under the second reading means by the transfer means.

**4.** (Amended) The automated warehouse system of claim 3, wherein
the rack is provided on at least one of respective left and right sides in the movement direction,
the first reading means is provided on at least one of respective left and right ends of the hoisting frame, and
the second reading means is provided in at least one of upper positions near the respective left and right ends of the hoisting frame.

**5.** (Amended) The automated warehouse system of claim 4, wherein the ID tags of the container are provided at both ends of the container in the left-right direction based on the state where the container is stocked in the rack.

**6.** (Amended) The automated warehouse system of claim 3, wherein
space for arranging at least two of the containers is provided in the hoisting frame, and the at least two containers can be transferred between the hoisting frame and the rack by the transfer means, and
internal transfer means is provided in the hoisting frame for transferring the articles between the at least two containers while reading the IDs of the articles.

**7.** (Deleted)

**8.** (Deleted)
